# EUROPÄISCHE PATENTSCHRIFT

(11) **EP 2 420 347 B1**
(45) Veröffentlichungstag und Bekanntmachung des Hinweises auf die Patenterteilung: **28.05.2014**
(21) Anmeldenummer: 10173546.2
(22) Anmeldetag: 20.08.2010
(51) Int. Cl.: B23Q 1/54

(54) **Bearbeitungsvorrichtung mit schwenkbarem Bearbeitungskopf**
Processing device with tiltable processing head
Dispositif de d'usinage avec tête inclinable

(43) Veröffentlichungstag der Anmeldung: 22.02.2012
(73) Patentinhaber: Homag Holzbearbeitungssysteme AG, 72296 Schopfloch (DE)
(72) Erfinder: Calmbach, Martin, 72160, Horb-Dießen (DE); Matt, Marco, 72250, Wittlensweiler (DE)
(74) Vertreter: HOFFMANN EITLE

(56) Entgegenhaltungen:
- EP-A1- 0 743 139
- EP-A1- 1 640 112
- DE-B3-102004 062 138

## Beschreibung

### Technisches Gebiet

Die vorliegende Erfindung bezieht sich auf eine Bearbeitungsvorrichtung zum Bearbeiten von bevorzugt dreidimensional geformten Werkstücken, die bevorzugt zumindest abschnittsweise aus Holz, aus Kunststoff oder dergleichen bestehen.

### Stand der Technik

Insbesondere in der Möbelindustrie werden geschwungene Werkstücke mit einer dreidimensionalen Form verarbeitet. Als Formholzteile werden diese dann z.B. für Möbelfronten, Möbelteile sowie Formholzteile für alle möglichen Einsatzzwecke verwendet.

Bei der Bearbeitung solcher dreidimensional geformter Werkstücke kommen auch richtungsorientierte Bearbeitungsvorrichtungen zum Einsatz, die zur Erzielung eines optimalen Bearbeitungsergebnisses eine bestimmte Winkellageorientierung zur Oberfläche bzw. Kante erfordern, die bearbeitet wird.

Anwendungsbeispiele für solche richtungsorientierten Bearbeitungsvorrichtungen sind z.B. Fräsaggregate mit Späneleitblech für die 3-D-Bearbeitung oder Verleimaggregate für Schrägkanten. Ferner erfordern Bearbeitungsvorrichtungen mit Tastkurven oder Tastrolle für die getastete Bearbeitung von Werkstücken mit einer dreidimensionalen Oberflächenstruktur einen richtungsorientierten Einsatz der Bearbeitungsvorrichtung. Ein weiterer Einsatzbereich richtungsorientierter Bearbeitungsvorrichtungen liegt in der richtungsorientierten Kantenbearbeitung mittels Bündigfräsaggregaten bei dreidimensional geformten Formteilen. Die genannten Bearbeitungsaufgaben erfordern zur Erzielung eines optimalen Arbeitsergebnisses eine jeweils spezifische räumliche Lageorientierung der Rotationsachse des Bearbeitungsmittels zur Orientierung der zu bearbeitenden Werkstückoberfläche.

Zwar ist aus der EP 0 743 139 B1 eine Aufnahme für Bearbeitungsmittel oder Aggregate und deren Schnittstelle zur Energie, Signal, Gas und Fluidübertragung an einem Mehrachsenbearbeitungskopf bekannt, jedoch lassen sich die so eingesetzten Bearbeitungsmittel nicht richtungsorientiert entlang von dreidimensional geformten zu bearbeitenden Bearbeitungsflächen bewegen.

Ferner offenbart die EP 1 640 112 A1 einen MehrachsenBearbeitungskopf nach dem Oberbegriff von Anspruch 1.

### Darstellung der Erfindung

Es ist daher Aufgabe der vorliegenden Erfindung, eine Bearbeitungsvorrichtung der oben genannten Art bereitzustellen, dass es ermöglicht, ein Bearbeitungsaggregat flexicher orientieren zu können

Erfindungsgemäß wird diese Aufgabe durch eine Bearbeitungsvorrichtung mit den Merkmalen des Patentanspruchs 1 gelöst. In den Unteransprüchen finden sich vorteilhafte Ausgestaltungen und Verbesserungen der Erfindung.

Eine erfindungsgemäße Bearbeitungsvorrichtung zum Bearbeiten von bevorzugt dreidimensional geformten Werkstücken, die bevorzugt zumindest abschnittsweise aus Holz, aus Kunststoffen oder dergleichen bestehen, weist die Merkmale von Anspruch 1 auf. Die erfindungsgemäße Bearbeitungsvorrichtung ermöglicht es, das Bearbeitungsmittel in seiner Orientierung mittels der Bearbeitungsachse auszurichten. Das Bearbeitungsmittel kann dadurch in eine gewünschte Drehlage zum zu bearbeitenden Werkstück gebracht werden. Somit ist es mittels der erfindungsgemäßen Bearbeitungsvorrichtung z.B. bei einer 5-Achsbearbeitung möglich beispielsweise ein Späneleitblech des Bearbeitungsmittels aus einem Kollisionsbereich zu verschwenken oder ein Kantenanleimaggregat immer parallel zur Kante auszurichten.

Dabei ist es von besonderem Vorteil, dass die Ausrichtung des Bearbeitungsmittels bei der erfindungsgemäßen Bearbeitungsvorrichtung auch während des Bearbeitungsbetriebes erfolgen kann, was die Bearbeitung dreidimensional geformter Werkstückoberflächen mit Ausrichtung des Bearbeitungsmittels zur Werkstückoberfläche überhaupt erst ermöglicht. Ferner erlaubt die Integration des Antriebes für die Bearbeitungsaggregatachse am ersten Abschnitt und/oder am zweiten Abschnitt eine einfache Konstruktion der ein- und auswechselbaren Bearbeitungsaggregate.

Gemäß einer ersten Alternative der vorliegenden Erfindung ist der Antrieb für die Bearbeitungsaggregatachse am ersten Abschnitt oder sogar am Basisabschnitt angeordnet. Das Drehmoment des Antriebs wird bei dieser Ausführungsform mittels eines Übertragungsgetriebes durch die zweite Drehachse, mittels der der zweite Abschnitt drehbar am ersten Abschnitt angeordnet ist, durchgeführt. Ein Vorteil für die Anordnung des Antriebs für die Bearbeitungsaggregatachse am ersten Abschnitt kann durch einen hier günstigen Einbauplatz gegeben sein. Aufgrund des großen aufzunehmenden Drehmoments ist der Querschnitt des ersten Abschnitts und/oder des Basisabschnitts oft verhältnismäßig groß gewählt, wodurch sich ein großer Einbauraum für den Antrieb bietet. Ferner kann das dynamische Verhalten der Bearbeitungsvorrichtung durch diese Maßnahme verbessert werden, da die Masse des Antriebs für die Bearbeitungsaggregatachse hierbei lediglich durch den ersten Abschnitt und/oder Basisabschnitt mitbewegt werden muss. Das Eigengewicht des Antriebs wirkt sich dadurch weniger stark als zu beschleunigende Trägheitsmasse aus.

Alternativ oder zusätzlich ist der Antrieb für die Bearbeitungsaggregatachse am zweiten Abschnitt angeordnet. Dadurch entfällt das Durchführen bzw. Übertragen des Antriebsmoments für die Bearbeitungsaggregatachse vom ersten Abschnitt zum zweiten Abschnitt, was eine Vereinfachung der Antriebsstruktur der Bearbeitungsvorrichtung ermöglicht.

Gemäß einer Weiterbildung der Erfindung ist der Antrieb über einen Getriebezug mit der Bearbeitungsaggregatachse gekoppelt. Dabei ist es besonders bevorzugt, dass sich der Getriebezug vom ersten Abschnitt und bevorzugt auch vom Basisabschnitt (2) ausgehend zumindest abschnittsweise im oder am zweiten Abschnitt erstreckt. Hierdurch ergibt sich eine besonders einfache und störungsfreie Konstruktion der erfindungsgemäßen Bearbeitungsvorrichtung.

Gemäß einer Weiterbildung der Erfindung ist ferner vorgesehen, dass zwischen dem Bearbeitungsaggregat und dem zweiten Abschnitt eine Aggregatschnittstelle zum Ein- und Auswechseln von Bearbeitungsaggregaten vorgesehen ist. Hierdurch erhält die erfindungsgemäße Bearbeitungsvorrichtung eine erhöhte Flexibilität, da unterschiedlichste Bearbeitungsaggregate in die Schnittstelle eingewechselt werden können. Dabei erfüllt die Aggregatschnittstelle auch die Funktion, die jeweiligen Aggregate mit Energie und/oder Betriebsmitteln zu versorgen, wie beispielsweise Drehmoment, elektrischer Energie, Druckfluid, Daten oder dergleichen. So kann es sich bei der Schnittstelle beispielsweise um eine universelle Schnittstelle handeln.

Dabei ist es besonders bevorzugt, dass die Aggregatschnittstelle oder ein Teil hiervon mittels des Antriebs um die Bearbeitungsaggregatachse drehbar ist. Auf diese Weise wird für die zusätzliche Verdrehbarkeit des Bearbeitungsaggregats kein zusätzliches Bauteil benötigt, sondern dieses kann über die ohnehin vorhandene Schnittstelle realisiert werden, die ganz oder teilweise zusammen mit dem Bearbeitungsaggregat um die Bearbeitungsaggregatachse gedreht wird.

Gemäß einer bevorzugten Ausführungsform der vorliegenden Erfindung ist die Bearbeitungsaggregatachse achsparallel zur Bearbeitungsachse angeordnet. Dadurch ist es möglich, das Bearbeitungsaggregat achsparallel zur Bearbeitungsachse zu verdrehen. Dadurch kann das Bearbeitungsaggregat bei senkrecht zu einer zu bearbeitenden Oberfläche ausgerichteten Bearbeitungsachse in eine gewünschte Winkelstellung zur Werkstückoberfläche ausgerichtet werden. Dies bietet in den einführend genannten Fällen Vorteile. So kann z.B. durch das Verdrehen des Bearbeitungsaggregates um die Bearbeitungsaggregatachse ein neben einem Fräser zur Freiformbearbeitung vorgesehenes Späneleitbleich in eine bestimmte Richtung der Werkstückoberfläche ausgerichtet werden und z.B. aus einem Kollisionsbereich mit einer Erhebung am Werkstück geschwenkt werden. Auch bei Verieimaggregaten ist zusätzlich zu deren beispielsweise orthogonalen Ausrichtung zur Werkstückoberfläche deren Winkelstellung relevant.

Gemäß einer bevorzugten Ausführungsform der vorliegenden Erfindung ist das rotatorische Bearbeitungsmittel besonders bevorzugt zur spanenden Werkstückbearbeitung oder bevorzugt zum Leimauftrag oder zum Andrücken von Kanten eingerichtet. Der Begriff rotatorisches Bearbeitungsmittel ist somit im Sinne der vorliegenden Erfindung breit zu verstehen. Zum einen fallen im Sinne der vorliegenden Erfindung unter diesen Begriff spanende rotatorische Werkzeuge, wie z.B. Fräser oder Bohrer, zum anderen werden hier unter dem Begriff rotatorisches Bearbeitungsmittel auch Rollen zum Leimauftrag auf das Werkstück oder zum Andrücken von Kanten an das Werkstück verstanden. Die rotatorischen Bearbeitungswerkszeuge im erfindungsgemäßen Bearbeitungsaggregat haben gemeinsam, dass sie um eine Bearbeitungsachse bei der Bearbeitung rotieren können, die achsparallel zur Bearbeitungsaggregatachse, also der Achse um die das Modul gedreht wird, verläuft.

Gemäß einer bevorzugten Ausführungsform weist das Bearbeitungsaggregat ferner eine Einheit zum Aufbringen und Andrücken von Kanten auf. Ist beispielsweise das Bearbeitungsmittel als Fräser für die spanende Werkstückbearbeitung ausgeführt, so kann damit gemäß dieser Ausführungsform der vorliegenden Erfindung zusätzlich durch das Bearbeitungsaggregat das Aufbringen und Andrücken von Kanten durchgeführt werden. Durch diese Kombination kann eine kombinierte Bearbeitung des Werkstücks durch das Bearbeitungsaggregat durchgeführt werden. Die Kombination einer Einheit zum Aufbringen und Andrücken von Kanten mit einem rotatorischen Bearbeitungsmittel zur spanenden Werkstückbearbeitung ist besonders deshalb vorteilhaft, da das Bearbeitungsmittel und die Einheit zum Aufbringen und Andrücken von Kanten beide richtungsorientiert zum Einsatz kommen können.

Gemäß einer besonderen Ausführungsform der vorliegenden Erfindung weist die Einheit zum Aufbringen und Andrücken von Kanten eine Andrückrolle auf. Bevorzugt ist dabei die Andrückrolle ebenfalls achsparallel zur Bearbeitungsaggregatachse angeordnet. Durch diese Anordnung der Andrückrolle ergibt sich aufgrund der Parallelität der Rotationsachsen von Andrückrolle und Bearbeitungsmittel eine einheitliche, steuerungstechnisch leicht beherrschbare Kinematik.

Gemäß einer besonderen Ausführungsform der vorliegenden Erfindung weist das Bearbeitungsaggregat ein Tastelement, insbesondere eine Tastrolle, zum Abstützen des Bearbeitungsaggregates bei Verwendung an einem Werkstück auf. Mittels des Tastelements kann das Bearbeitungsaggregat bei der Bearbeitung eines Werkstücks bei gleitendem oder rollendem Abstützen am Werkstück entlang dem Werkstück geführt werden. Dadurch wird das rotatorische Bearbeitungsmittel oder auch die Einheit zum Aufbringen und Andrücken von Kanten in einem definierten Abstand zum Werkstück gehalten. Dies bietet den Vorteil, dass bei Abweichungen des Werkstücks von einer Sollgeometrie, eine genaue Oberflächenbearbeitung trotzdem möglich ist, da das Bearbeitungsaggregat in einem definierten Abstand zur tatsächlichen Werkstückoberfläche verfahren wird. Toleranzen in der Werkstückgeometrie, die im NC-Programn zur Steuerung der Bearbeitungsvorrichtung nicht abgebildet sind, können damit direkt vom Bearbeitungsaggregat mittels des Tastelementes ausgeglichen werden. Bevorzugt wird die Tastrolle achsparallel zur Bearbeitungsaggregatachse angeordnet, kann aber auch winkelig zur Bearbeitungsaggregatachse angeordnet sein. Wenn die Tastrolle achsparallel zur Bearbeitungsaggregatachse angeordnet ist, ist kann ferner eine Achsparallelität auch zur Rotationsachse des rotatorischen Bearbeitungsmittels zur spanenden Werkstückbearbeitung erzielt werden. Durch ein achsparalleles Anordnen der Tastrolle zur Rotationsachse des rotatorischen Bearbeitungsmittels, wird ein Verschieben des Bearbeitungsaggregates in Richtung der Bearbeitungsaggregatachse verhindert, da die aus dem Abrollen der Tastrolle am Werkstück resultierenden Kräfte in Richtung der Bearbeitungsaggregatachse minimiert sind. Damit ergibt sich ein besonders günstiges Konturfolgeverhalten des Bearbeitungsaggregates.

### Kurze Beschreibun der Zeichnungen

Fig. 1 eine schematische perspektivische Darstellung einer erfindungsgemäßen Bearbeitungsvorrichtung gemäß einem ersten Ausführungsbeispiel;
Fig. 2 eine Seitenansicht der erfindungsgemäßen Bearbeitungsvorrichtung gemäß dem ersten Ausführungsbeispiel, jedoch mit abgewandeltem Bearbeitungsaggregat.

### Ausführliche Beschreibung bevorzugter Ausführungsformen

Die Erfindung wird im Folgenden anhand bevorzugter Ausführungsformen unter Bezugnahme auf die beiliegenden Figuren näher erläutert.

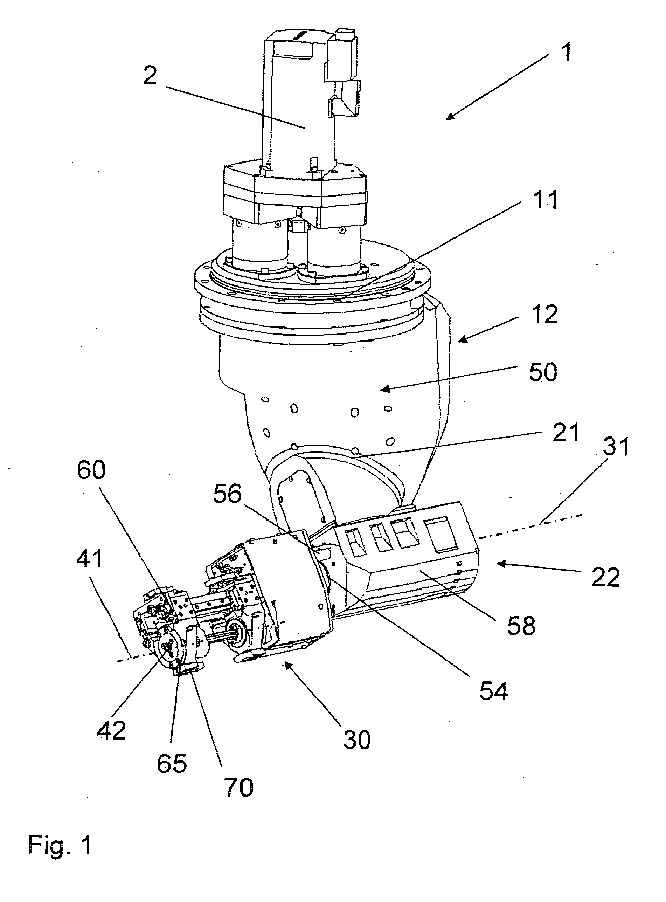

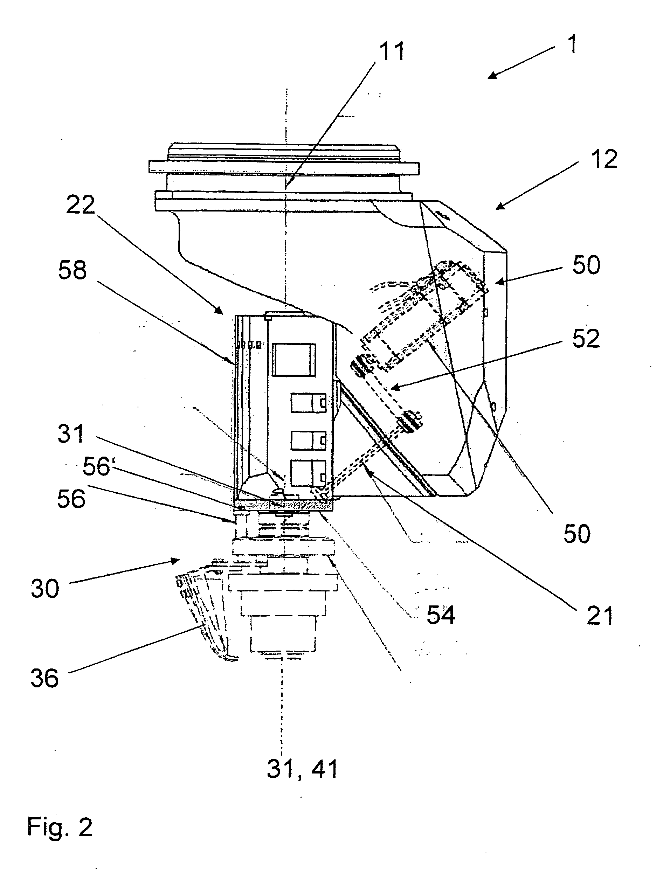

Fig. 1 und 2 zeigen eine schematische perspektivische Darstellung bzw. eine Seitenansicht einer erfindungsgemäßen Bearbeitungsvorrichtung 1 mit unterschiedlichen Bearbeitungsaggregaten. Mittels einer ersten Drehachse 11 ist die Bearbeitungsvorrichtung 1 mit einem ersten Abschnitt 12 drehbar an einer Basisabschnitt 2 angebracht. Bei dem Basisabschnitt 2 kann es sich beispielsweise um einen verfahrbaren Maschinenschlitten handeln, der beispielsweise in drei zueinander senkrechten Richtungen translatorisch verfahrbar ist.

Über eine zweite Drehachse 21 ist ein zweiter Abschnitt 22 der Bearbeitungsvorrichtung 1 drehbar am ersten Abschnitt 12 angebracht. Schließlich ist ein Bearbeitungsaggregat 30 mittels einer Bearbeitungsaggregatachse 31 drehbar am zweiten Abschnitt 22 angebracht.

Das Bearbeitungsaggregat 30 weist in Fig. 1 ein Bearbeitungsmittel 42 auf, das in der vorliegenden Ausführungsform um eine Bearbeitungsachse 41 drehbar ist. Bei diesem Ausführungsbeispiel ist das Bearbeitungsmittel 42 ein rotatorisches Bearbeitungswerkzeug. Die Bearbeitungsaggregatachse 31 zur drehbaren Lagerung des Bearbeitungsaggregates 30 ist dabei achsparallel zur Bearbeitungsachse 41 des Bearbeitungswerkzeugs 42 ausgerichtet. Alternativ kann es sich bei dem Bearbeitungsmittel jedoch auch um ein nicht rotierendes Mittel wie beispielsweise eine Ziehklinge handeln.

Das Bearbeitungswerkzeug 42 ist mittels einer Motorspindel 58, die Teil des zweiten Abschnitts 22 ist, drehen antreibbar. Dabei wird der Drehantrieb der Motorspindel 58 über die Schnittstelle 54 zu dem Bearbeitungsaggregat 30 bzw. dessen Bearbeitungswerkzeug 42 übertragen. Bei der Schnittstelle kann es sich um eine universelle Schnittstelle handeln, die zum Ein- und Auswechseln unterschiedlichster Bearbeitungsaggregate 30 geeignet ist. Eine derartige Schnittstelle ist beispielsweise in der EP 0 743 139 A offenbart.

Am Bearbeitungsaggregat 30 ist ferner eine Einheit 60 zum Aufbringen und Andrücken von Kanten durch eine Andrückrolle 65 vorgesehen. Ein Tastelement 70 ist am Bearbeitungsaggregat 30 angebracht, das bei diesem Ausführungsbeispiel die Form eines gebogenen Blechs aufweist.

In Fig. 2 ist ein Bearbeitungsaggregat 30 mit einem Späneleitblech 36 gezeigt, das gemeinsam mit dem Bearbeitungsaggregat 30 um die Bearbeitungsaggregatachse 31 drehbar ist.

Wie in Fig. 2 am besten zu erkennen ist, ist in der vorliegenden Ausführungsform am ersten Abschnitt 12 ein Antrieb 50 für die Bearbeitungsaggregatachse 31 angeordnet. Der Antrieb 50 ist über einen Getriebezug 52 mit der Bearbeitungsaggregatachse gekoppelt. Genauer gesagt treibt der Antrieb 50 über den Getriebezug 52 die Schnittstelle 54 drehend an, sodass mit der Schnittstelle 54 das Bearbeitungsaggregat 30 um die Bearbeitungsaggregatachse 31 gedreht wird. Im vorliegenden Ausführungsbeispiel ist das Bearbeitungsaggregat 30 über einen Mitnehmerbolzen 56 mit einer Aufnahme 56' der Schnittstelle 54 verbunden, sodass das Drehmoment um die Bearbeitungsaggregatachse 31 sicher auf das Bearbeitungsaggregat 30 übertragen werden kann.

Im Betrieb kann das Bearbeitungsaggregat 30 durch Verdrehen des ersten Abschnitts 12 um die erste Drehachse 11 und Verdrehen des zweiten Abschnitts 22 um die zweite Drehachse 21 in eine gewünschte Orientierung im Raum gebracht werden. Zum Beispiel kann das Bearbeitungsaggregat 30 so ausgerichtet werden, dass das rotatorische Bearbeitungswerkzeug 42, z.B. ein Fräser, orthogonal zur Oberfläche des Werkstücks 2 ausgerichtet wird. Zusätzlich zu dieser Möglichkeit der Ausrichtung des Bearbeitungswerkzeugs 42 im Raum kann das Bearbeitungsaggregat 30 um seine Bearbeitungsaggregatachse 31, die parallel zur Bearbeitungsachse 41 verläuft, gedreht werden, so dass eine gewünschte Orientierung des Bearbeitungsaggregates 30 bezüglich der Werkstückoberfläche des Werkstücks 2 realisiert werden kann.

Damit kann das Bearbeitungsaggregat 30 der erfindungsgemäßen Bearbeitungsvorrichtung 1 sogar während des Bearbeitungsbetriebes besonders gut an die Erfordernisse der Werkstückgeometrie unter Berücksichtigung des eingesetzten Bearbeitungswerkzeugs 42 oder auch einer Einheit 60 zum Aufbringen und Andrücken von Kanten ausgerichtet werden. Diese Vorteile kommen besonders bei der 3-D-Bearbeitung mit Späneleitblech z.B. von Handlaufkrümmlingen, beim Einsatz von Verleimaggregaten für Schrägkanten, bei der getasteten Bearbeitung von konvexen oder konkaven 3-D-Teilen oder beim Bündigfräsen von 3-D-Formteilen zum Tragen. Auch kann ein Abblasaggregat oder sonstiges Reinigungsaggregat zum Einsatz kommen.

Obgleich in den Figuren nicht gezeigt, kann der Antrieb 50 auch ganz oder teilweise im oder am zweiten Abschnitt 22 vorgesehen sein. So ist es beispielsweise denkbar, innerhalb oder außerhalb der Motorspindel 58 einen zusätzlichen Antrieb 50 vorzusehen. Alternativ kann der Antrieb auch im Basisabschnitt 2 vorgesehen sein. In diesem Falle erstreckt sich ein Getriebezug vom Basisabschnitt 2 ausgehend durch oder entlang des ersten und zweiten Abschnitts 12, 22 zur Bearbeitungsaggregatachse 31.

## Patentansprüche

1. Bearbeitungsvorrichtung (1) zum Bearbeiten von bevorzugt dreidimensional geformten Werkstücken (2), die bevorzugt zumindest abschnittsweise aus Holz, aus Kunststoff oder dergleichen bestehen, mit:
wenigstens einer ersten Drehachse (11), mittels der ein erster Abschnitt (12) der Bearbeitungsvorrichtung (1) drehbar an einem Basisabschnitt (2) angebracht ist,
einer zweiten Drehachse (21), mittels der ein zweiter Abschnitt (22) der Bearbeitungsvorrichtung (1) drehbar am ersten Abschnitt (12) angebracht ist,
einem Bearbeitungsaggregat (30), das mittels einer Bearbeitungsaggregatachse (31) drehbar am zweiten Abschnitt (22) angebracht ist und das
wenigstens ein, bevorzugt um eine Bearbeitungsachse (41) drehbares, Bearbeitungsmittel (42) aufweist,
wobei die Bearbeitungsvorrichtung eine Motorspindel (58) zum drehenden Antreiben des Bearbeitungsmittels (42) aufweist, **dadurch gekennzeichnet, dass**
die Bearbeitungsvorrichtung einen Antrieb (50) für die Bearbeitungsaggregatachse (31) aufweist,
der Antrieb (50) am ersten Abschnitt (12) und/oder am zweiten Abschnitt (22) und/oder am Basisabschnitt (2) angeordnet ist, und das Bearbeitungsaggregat (30) während des Bearbeitungsbetriebes um die Bearbeitungsaggregatachse (31) ausgerichtet werden kann.

2. Bearbeitungsvorrichtung (1) nach Anspruch 1, **dadurch gekennzeichnet, dass** der Antrieb (50) über einen Getriebezug (52) mit der Bearbeitungsaggregatachse (31) gekoppelt ist.

3. Bearbeitungsvorrichtung (1) nach Anspruch 2, **dadurch gekennzeichnet, dass** sich der Getriebezug (52) vom ersten Abschnitt (12) und bevorzugt auch vom Basisabschnitt (2) ausgehend zumindest abschnittsweise im oder am zweiten Abschnitt (22) erstreckt.

4. Bearbeitungsvorrichtung (1) nach einem der vorhergehenden Ansprüche, **dadurch gekennzeichnet, dass** zwischen dem Bearbeitungsaggregat (30) und dem zweiten Abschnitt (22) eine Aggregatschnittstelle (54) zum Ein- und Auswechseln von Bearbeitungsaggregaten (30) vorgesehen ist.

5. Bearbeitungsvorrichtung (1) nach Anspruch 4, **dadurch gekennzeichnet, dass** die Aggregatschnittstelle (54) oder ein Teil (56') hiervon mittels des Antriebes (50) um die Bearbeitungsaggregatachse (31) drehbar ist.

6. Bearbeitungsvorrichtung (1) nach einem der vorhergehenden Ansprüche, **dadurch gekennzeichnet, dass** die Bearbeitungsaggregatachse (31) achsparallel zur Bearbeitungsachse (41) angeordnet ist.

7. Bearbeitungsvorrichtung (1) nach einem der vorhergehenden Ansprüche, **dadurch gekennzeichnet, dass** das Bearbeitungsmittel (42) zur spanenden Werkstückbearbeitung, zum Leimauftrag, zum Andrücken von Kanten, zum Drucken oder Veredeln eingerichtet ist.

8. Bearbeitungsvorrichtung (1) nach einem der vorhergehenden Ansprüche, **dadurch gekennzeichnet, dass** das Bearbeitungsaggregat (30) eine Einheit (60) zum Aufbringen und Andrücken von Kanten, insbesondere mittels einer Andrückrolle (65), aufweist.

9. Bearbeitungsvorrichtung (1) nach einem der vorhergehenden Ansprüche, **dadurch gekennzeichnet, dass** das Bearbeitungsaggregat (30) ein Tastelement (70), insbesondere eine Tastrolle, zum Abstützen des Bearbeitungsaggregates (30) bei Verwendung an einem Werkstück (2) aufweist.

## Claims

1. Processing device (1) for processing preferably three-dimensionally shaped workpieces (2) which preferably consist at least in some sections of wood, of plastic or the like, having:
at least one first axis of rotation (11), by means of which a first section (12) of the processing device (1) is attached to a base section (2) to be rotatable,
a second axis of rotation (21), by means of which a second section (22) of the processing device (1) is attached to the first section (12) to be rotatable,
a processing unit (30), which, by means of a processing unit axis (31), is attached to the second section (22) to be rotatable and which has
at least one processing means (42) which can be rotated preferably about a processing axis (41),
wherein the processing device has a motor spindle (58) for rotary driving of the processing means (42),
**characterised in that** the processing device has a drive (50) for the processing unit axis (31),
the drive (50) is arranged on the first section (12) and/or on the second section (22) and/or on the base section (2), and the processing unit (30) may be aligned about the processing unit axis (31) during the processing operation.

2. Processing device (1) according to claim 1, **characterised in that** the drive (50) is coupled to the processing unit axis (31) via a gear train (52).

3. Processing device (1) according to claim 2, **characterised in that** the gear train (52) extends from the first section (12) and preferably also from the base section (2) starting at least in some sections in or on the second section (22).

4. Processing device (1) according to one of the preceding claims, **characterised in that** a unit interface (54) for changing and exchanging of processing units (30) is provided between the processing unit (30) and the second section (22).

5. Processing device (1) according to claim 4, **characterised in that** the unit interface (54) or a part (56') thereof can be rotated about the processing unit axis (31) by means of the drive (50).

6. Processing device (1) according to one of the preceding claims, **characterised in that** the processing unit axis (31) is arranged to be axis-parallel to the processing axis (41).

7. Processing device (1) according to one of the preceding claims, **characterised in that** the processing means (42) is equipped for metal-cutting workpiece processing, for size application, for pressing-on of edges, for printing or finishing.

8. Processing device (1) according to one of the preceding claims, **characterised in that** the processing unit (30) has a unit (60) for application and pressing-on of edges, in particular by means of a pressing roller (65).

9. Processing device (1) according to one of the preceding claims, **characterised in that** the processing unit (30) has a key element (70), in particular a jockey roller, for supporting the processing unit (30) when used on a workpiece (2).

## Revendications

1. Dispositif d'usinage (1) pour usiner des pièces (2) de préférence de forme tridimensionnelle qui sont de préférence au moins par sections en bois, en matière plastique ou similaire, avec:
au moins un premier axe de rotation (11), au moyen duquel une première section (12) du dispositif d'usinage (1) est placée de manière à pouvoir tourner sur une section de base (2),
un second axe de rotation (21), au moyen duquel une seconde section (22) du dispositif d'usinage (1) est placée de manière à pouvoir tourner sur la première section (12),
un groupe d'usinage (30), qui au moyen d'un axe de groupe d'usinage (31) est placé de manière à pouvoir tourner sur la seconde section (22), et qui présente au moins un moyen d'usinage (42) pouvant tourner de préférence autour d'un axe d'usinage (41),
le dispositif d'usinage présentant une broche à moteur (58) pour l'entraînement en rotation du moyen d'usinage (42),
**caractérisé en ce que**
le dispositif d'usinage présente un entraînement (50) pour l'axe de groupe d'usinage (31), l'entraînement (50) est agencé sur la première section (12) et/ou la seconde section (22) et/ou sur la section de base (2), et le groupe d'usinage (30) peut être aligné sur l'axe de groupe d'usinage (31) pendant l'opération d'usinage.

2. Dispositif d'usinage (1) selon la revendication 1, **caractérisé en ce que** l'entraînement (50) est couplé à l'axe de groupe d'usinage (31) via un train d'engrenages (52).

3. Dispositif d'usinage (1) selon la revendication 2, **caractérisé en ce que** le train d'engrenages (52) s'étend à partir de la première section (12) et de préférence également de la section de base (2) au moins par sections dans ou à la seconde section (22).

4. Dispositif d'usinage (1) selon l'une des revendications précédentes, **caractérisé en ce qu'**entre le groupe d'usinage (30) et la seconde section (22) est prévue une interface de groupe (54) pour échanger et installer des groupes d'usinage (30).

5. Dispositif d'usinage (1) selon la revendication 4, **caractérisé en ce que** l'interface de groupe (54) ou une partie (56') de ceci peut tourner autour de l'axe de groupe d'usinage (31) au moyen de l'entraînement (50).

6. Dispositif d'usinage (1) selon l'une des revendications précédentes, **caractérisé en ce que** l'axe de groupe d'usinage (31) est agencé axialement parallèlement à l'axe d'usinage (41).

7. Dispositif d'usinage (1) selon l'une des revendications précédentes, **caractérisé en ce que** le moyen d'usinage (42) est équipé pour l'usinage de pièce par enlèvement de copeaux, pour l'application de colle, pour comprimer des arêtes, pour marquer ou de la finition.

8. Dispositif d'usinage (1) selon l'une des revendications précédentes, **caractérisé en ce que** le groupe d'usinage (30) présente une unité (60) pour appliquer et comprimer des arêtes, en particulier au moyen d'un rouleau de pression (65).

9. Dispositif d'usinage (1) selon l'une des revendications précédentes, **caractérisé en ce que** le groupe d'usinage (30) présente un élément palpeur (70), en particulier un galet palpeur, pour soutenir le groupe d'usinage (30) lors de l'utilisation sur une pièce (2).
